# EUROPEAN PATENT APPLICATION

(11) **EP 2 543 598 A2**
(43) Date of publication of application: **09.01.2013**
(21) Application number: 12174655.6
(22) Date of filing: 02.07.2012
(51) Int. Cl.: B64D 39/00

(54) **Tanker aircraft with a refueling device for refueling with a hose and a drogue and an electric power generator**

(30) Priority: 06.07.2011 ES 201131150
(71) Applicant: EADS Construcciones Aeronauticas, S.A., 28022 Madrid (ES)
(72) Inventor: Fernández García, Francisco Javier, 28022 Madrid (ES)
(74) Representative: Elzaburu Marquez, Alberto

(57) **Abstract**

A tanker aircraft that comprises at least two hose (7) and drogue (9) refueling devices housed in gondolas (10) deployed under its wings comprising, in turn, at once fuel pump (23) and winding drum (27) for hose (7), characterized in that said devices comprise electric generator (21) actuated by wind turbine (11) that is connected to the electrical system of the tanker aircraft as an additional source for supplying power when the aircraft is in flight.

## Description

### FIELD OF THE INVENTION

This invention refers to a tanker aircraft with an air to air hose and drogue refueling device deployed underneath the wings.

### BACKGROUND

Among the known devices for conducting air to air refueling operations is a refueling device with a flexible hose and a drogue that is dragged from the tanker aircraft. The basked is an accessory joined to the hose by means of a valve for the purpose of stabilizing it during flight and providing a channel that assists in inserting the probe of the receiver aircraft into the hose. The hose is connected to a drum unit which, when it is not in use, is completely reeled into the drum unit. The receiver aircraft has a probe which is a rigid arm situated on the fuselage or nose of the aircraft. The probe is normally retracted when it is not in use, especially in high velocity aircraft.

A tanker aircraft can have two hose and drogue refueling devices housed in gondolas suspended from its wings and also a hose and drogue refueling device located in the central fuselage. It can also include other types of refueling devices, such as a refueling device with a rigid pole in its tail.

The hose and drogue refueling devices housed in gondolas incorporate a fuel pump for increasing the output pressure of the hose up to the level required by the receptor aircraft (approximately 50 psi) over the fuel pressure of the distribution line of the tanker aircraft. The integrated pump is a centrifuge type and the fuel pressure is regulated by adjusting the rotation speed of the fuel pump according to the output pressure, in such a way that to increase the pressure the rotation speed of the pump is increased and vice versa.

In the known devices the fuel pump is actuated an by a wind turbine, such as a RAT ("Ram Air Turbine") with the velocity controlled by varying the pace of the propeller. Consequently little power is required from the tanker aircraft (it is only needed for the control actuator of the propeller speed of the wind turbine). When an increase in the spin velocity is wanted, the control system sends the order to the actuator to increase the propeller speed. At times when the fuel pump is not being used, or in cases of a failure, the propeller is feathered so that no torque is applied to the turbine. In this way both the turbine and the pump remain stationary at zero velocity. Consequently in the known devices the RAT is used as an internal hydraulic power generator in the hose and drogue refueling system.

During a large portion of the refueling mission the RAT thus remains with the propeller feathered given that the pump must remain inactive. This occurs during the approach and separation phases of the flight to and from the refueling station, during deployment and reeling in of the hose and during dry contacts without fuel transfer, as the RAT is used only during those operations with fuel transfer that require a pressure increase above the distribution pressure of the tanker aircraft.

All of this assumes that the percentage of use of the RAT during the overall refueling mission is low and so its capacity for generating electricity, on the order of 10 Kw, is underused.

This invention is oriented to provide a solution to this problem.

### SUMMARY OF THE INVENTION

One object of the present invention is to optimize the power produced by the RATs installed in the hose and drogue refueling devices housed in gondolas deployed under the wings of the tanker aircraft.

Another object of the present invention is to increase the use of electric power in the tanker aircraft given the advantages this implies (a large amount of literature has been generated in this regard under the terms "More Electric Aircraft").

These and other objectives are obtained with a tanker aircraft that comprises at least two hose and drogue refueling devices housed in gondolas deployed under their wings comprising, in turn, at least one fuel pump and a winding drum for the hose and also comprising an electric generator actuated by a wind turbine that is connected to the electrical system of the tanker aircraft as an additional source for supplying power when the aircraft is in flight. This additional source of electric power can also constitute an emergency power source in the event of a total engine failure of the aircraft in flight.

In embodiments of the present invention, the fuel pump is actuated by an electric motor fed by an electrical line connected to the electrical system of the tanker aircraft. In this way a hose and drogue refueling device is obtained that has more electrically actuated components than current devices and is capable of producing more power than it consumes.

In embodiments of the present invention said wind turbine also actuates the fuel pump. By this means a hose and drogue refueling device is obtained capable of producing more power than it consumes while maintaining the type of fuel pumps currently used.

In embodiments of the present invention the overall actuator device of the electrical generator and fuel bomb comprises a gear box with a first output shaft for driving the electrical generator and a second output shaft for driving the fuel pump, and a control unit with appropriate means to determine the distribution of power between said output shafts. This achieves a transmission device that makes it possible to efficiently control the overall actuation of the electric generator and fuel pump.

In embodiments of the invention said gear box is either a differential or planetary gear box or a direct drive gearbox, and the driving device also comprises either an electromechanically actuated brake for each one of said drive shafts or a clutch for engaging the electrical generator and fuel pump to each one of said shafts controlled by said control unit. This provides two variants of the invention with their respective advantages and disadvantages.

In embodiments of the invention said generator is a 115 Vac. AC generator or a 270 Vdc generator. This enables the refueling device to be able to use an appropriate generator for the two types of voltages currently contemplated for tanker aircraft.

Other features and advantages of the present invention will be disclosed in the detailed description that follows from an illustrative embodiment of its object in relation to the drawing that accompanies it.

### BRIEF OF THE DRAWINGS

Figure 1 shows schematically the internal structure of the gondola of a hose and drogue refueling device incorporated in a tanker aircraft known in the art.
Figures 2, 3 and 4 show schematically the internal structure of the gondola of a hose and drogue refueling device incorporated in a tanker aircraft in accordance with three embodiments of the present invention.

### DETAILED DESCRIPTION OF THE PREFERRED EMBODIMENTS

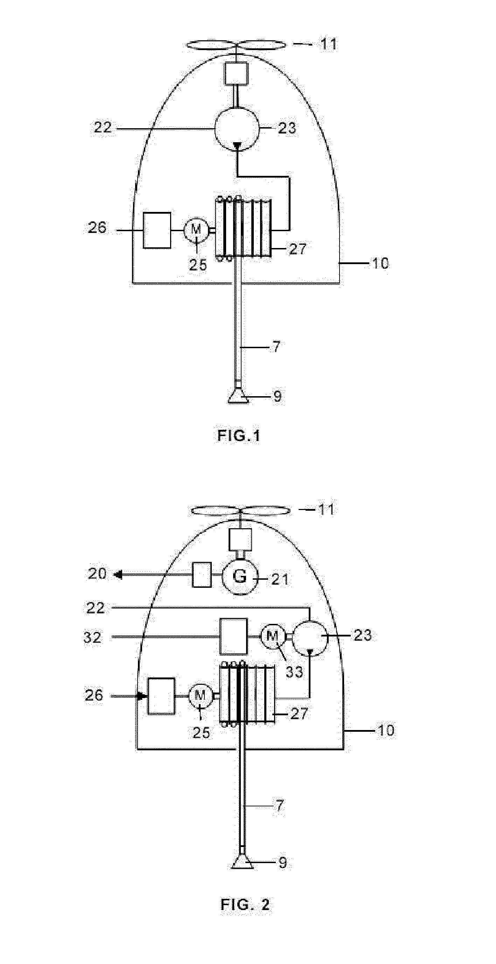

For a better comprehension of the invention, first of all we will describe the basic components housed in gondola 10 of a known hose 7 and drogue 9 refueling device in reference to Figure 1:
- fuel pump 23, actuated by RAT 11, to increase the fuel pressure dispensed from the tanker aircraft with fuel line 22.
- winding drum 27 of hose 7 actuated by motor 7 fed by dispensing power line 26 (electric or hydraulic).

Thus the basic idea of the present invention is to incorporate an electric generator in the gondola acted on by the RAT and connected to the electrical system of the tanker aircraft in such a way that the electric power generated may be transferred to the electrical system of the aircraft so that it may be used during the entire refueling mission by any of the possible consumers that may need it. In this way use of the RAT of each gondola would be 100% (except in the event of a failure) during the refueling mission.

In a first embodiment of the invention (see Figure 2) the components housed in gondola 10 of the hose 7 and drogue 9 refueling device comprise:
- electric generator 21 actuated by RAT 11 for providing electric power to the electrical system of the tanker aircraft by means of electrical line 20.
- fuel pump 23 for increasing the fuel pressure dispensed from the tanker aircraft through fuel line 22, actuated by, for example, electric motor 33 fed by electrical line 32 connected to the electrical system of the tanker aircraft.
- winding drum 27 of hose 7 actuated by, for example, electric motor 25 fed by electric power line 26 connected to the electrical system of the tanker aircraft.

In this way 100% of the power provided by RAT 11 is transferred, less losses, to the electrical system of the tanker aircraft. As we have pointed out, the actuators of fuel pump 23 and winding drum 27 of hose 7 are preferably electric actuators fed by the electrical system of the tanker aircraft.

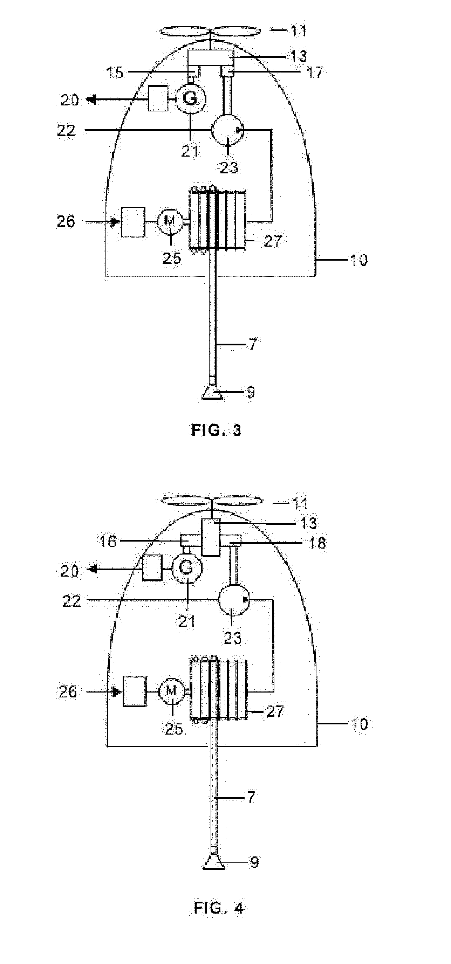

In a second embodiment of the invention (see Figure 3) the components housed in the gondola 10 of hose 7 and drogue 9 refueling device comprise:
- electric generator 21 actuated by RAT 11 for providing electric power to the electrical system by means of electrical line 20;
- fuel pump 23 also actuated by said RAT 11 to increase fuel output pressure from the tanker aircraft through fuel line 22;
- differential or planetary gear box 13 with two output shafts as a mechanism for the transmission of power from RAT 11 to electric generator 21 and fuel pump 23;
- two brakes 15, 17 electromechanically actuated on the output shafts of gear box 13 that enables them to be blocked individually when use of fuel pump 23 is not required or when a failure occurs that requires the disconnection of electric generator 21;
- a control unit (not depicted) for managing power distribution between said output shafts, giving higher priority to fuel pump 23 in the moments in which it may be necessary during the refueling mission and to command breaks 15, 17;
- winding drum 27 for hose 7 actuated by, for example, electric motor 25 fed by electric power line 26 connected to the electrical system of the tanker aircraft.

In this manner RAT 11 would be at its maximum power output, providing fuel pump 23 only the power it needs in each moment, and transferring the rest of the power to electric generator 21.

In a third embodiment of the invention (see Figure 4) the components housed in gondola 10 of the hose and drogue refueling device comprise:
- electric generator 21 actuated by RAT 11 for providing electric power to the electrical system of the tanker aircraft by means of electrical line 20.
- fuel pump 23 also actuated by said RAT 11 to increase fuel output pressure from the tanker aircraft by fuel line 22;
- direct drive gear box 13 with two output shafts as a mechanism for the transmission of power from RAT 11 to electric generator 21 and fuel pump 23;
- two clutches 16, 18 actuated electromechanically for the coupling and decoupling (depending on the need) of electric generator 21 and fuel pump 23 to said output shafts.
- a control unit (not depicted) for managing power distribution between said output shafts, giving higher priority to fuel pump 23 in the moments in which it may be necessary during the refueling mission, and to command clutches 16, 18;
- winding drum 27 for hose 7 actuated by, for example, electric motor 25 fed by electric power line 26 connected to the electrical system of the tanker aircraft.

In this manner RAT 11 would be transferring its maximum power output, providing fuel pump 23 only the power it needs in each moment, and providing electric generator 21 the rest of the power.

In some preferred embodiments of the invention the electric generator is a 115 Vac AC generator at a free frequency.

In other preferred embodiments of the invention the electric generator is a 270 Vdc DC generator.

Although the instant invention has been disclosed entirely in connection with the preferred embodiments, it is clear that those modifications that are within its scope may be introduced, and that the invention should not be considered limited by the previous embodiments, but rather to the content of the following claims.

## Claims

1. A tanker aircraft that comprises at least two hose (7) and drogue (9) refueling devices housed in gondolas (10) deployed under its wings comprising, in turn, at least one fuel pump (23) and winding drum (27) for hose (7), **characterized in that** said devices also comprise electric generator (21) actuated by wind turbine (11) that is connected to the electrical system of the tanker aircraft as an additional source for supplying power when the aircraft is in flight.

2. A tanker aircraft in accordance with claim 1, in which said fuel pump (23) is actuated by electric motor (33) fed by electric line (32) connected to the electrical system of the tanker aircraft.

3. A tanker aircraft in accordance with claim 1, in which said wind turbine (11) also actuates said fuel pump (23).

4. A tanker aircraft in accordance with claim 3, in which said wind turbine (11) actuates both electric generator (21) and fuel pump (23) by means of a actuator device that comprises gear box (13) with a first output shaft for driving the electrical generator (21) and a second output shaft for driving the fuel pump (23), and a control unit with appropriate means to determine the distribution of power between said output shafts.

5. A tanker aircraft in accordance with claim 4, in which said gear box (13) is a differential or planetary gear box and in which said actuator device comprises brake (15, 17) on each one of said shafts actuated electromechanically and controlled by said control unit.

6. A tanker aircraft in accordance with claim 4, in which said gear box (13) is a direct drive gear box and in which the actuating device also comprises clutch (16, 18) on each one of said shafts for coupling electric generator (21) and fuel pump (23), said clutch being actuated electromechanically and controlled by said control unit.

7. A tanker aircraft in accordance with any of claims 1-6, **characterized in that** said electric generator (21) is a 115 Vac AC generator.

8. A tanker aircraft in accordance with any of claims 1-6, **characterized in that** said electric generator (21) is a 270 Vdc DC generator.

9. A tanker aircraft in accordance with any of claims 1-8, **characterized in that** said electric generator (21) has an output voltage of 5 - 15 Kw.
